Europäisches Patentamt

European Patent Office

Office européen des brevets

(11) Veröffentlichungsnummer: **0 274 716**
**A1**

## (12) EUROPÄISCHE PATENTANMELDUNG

(21) Anmeldenummer: 87118850.4

(22) Anmeldetag: 18.12.87

(51) Int. Cl.⁴: **H02P 5/40** , H02P 7/62

(30) Priorität: 09.01.87 DE 3700524

(43) Veröffentlichungstag der Anmeldung:
20.07.88 Patentblatt 88/29

(84) Benannte Vertragsstaaten:
CH DE IT LI

(71) Anmelder: **Siemens Aktiengesellschaft Berlin und München**
**Wittelsbacherplatz 2**
**D-8000 München 2(DE)**

(72) Erfinder: **Vogelmann, Heinrich-Karl, Dr.**
**Orchideenstrasse 8**
**D-7519 Eppingen(DE)**

(54) Verfahren und Vorrichtung zum Bestimmen des Flussvektors einer Drehfeldmaschine.

(57) Um eine Drehfeldmaschine, insbesondere eine permanent erregte Synchronmaschine, ohne mechanischen Geber auch bei niedrigen Frequenzen regeln zu können, wird in einem Flußrechner (CAL) der EMK-Vektor integriert. Der Richtungswinkel (w) des dadurch errechneten Modell-Flußvektors wird durch Aufschalten eines dazu senkrechten Korrekturvektors solange gedreht, bis eine zum Modell-Flußvektor parallele oszillierende Ständerstromkomponente (ios*) keine entsprechenden Oszillationen in der dazu senkrechten Ständerstromkomponente (iq) erzeugt.

Bevorzugt bildet ein Multiplizierer (MK) ein Korrelationssignal zwischen der eingeprägten oszillierenden Ständerstromkomponente (ios*) und den Oszillationen in der dazu senkrechten Ständerstromkomponente (iq). Das Korrelationssignal gibt den Wert der zum Modell-Flußvektor senkrechten Komponente (Kq) des Korrekturvektors an.

FIG 1

EP 0 274 716 A1

## Verfahren und Vorrichtung zum Bestimmen des Flußvektors einer Drehfeldmaschine

Die Erfindung betrifft ein Verfahren zum Bestimmen des Flußvektors einer Drehfeldmaschine, der über einen Umrichter ein Ständerstromvektor eingeprägt wird, entsprechend dem Oberbegriff des Anspruchs 1. Die Erfindung betrifft ferner die Anwendung des Verfahrens beim Betrieb einer Drehfeldmaschine, eine Vorrichtung zur Bestimmung des Flußvektors der Drehfeldmaschine und ein Verfahren zum Betrieb dieser Vorrichtung.

Für den hochdynamischen Betrieb einer Drehfeldmaschine sind feldorientierte Regelungen bekannt, denen zwei voneinander unabhängige Sollwerte vorgegeben werden, die in einem synchron mit dem Fluß rotierenden Koordinatensystem die zum Flußvektor parallele Komponente des Ständerstromvektors und die dazu senkrechte Komponente bestimmen. Mittels des Richtungswinkels des Flußvektors wird in der Steuerung eine Transformation in das ruhende Koordinatensystem der Maschinen-Ständerwicklung vorgenommen, wobei diese Transformation mit einer entsprechenden Ständerstromregelung verbunden ist und die Stellsignale für einen Umrichter liefert. Der Umrichter prägt dann der Ständerwicklung das Drehstromsystem ein, das dem durch die Sollwerte der Komponenten gegebenen Sollvektor entspricht.

Die für diese feldorientierte Regelung benötigte Information über den Flußvektor (oder zumindest dessen Richtung) kann in einem sogenannten "Spannungsmodell" aus der Ständerspannung und dem Ständerstrom berechnet werden. Dabei wird zunächst der EMK-Vektor im ständerorientierten Bezugssystem ermittelt und anschließend durch vektorielle Integration ein Modellvektor des Flusses errechnet. Der Nachteil dieses Spannungsmodells ist, daß die Ständerspannung, die bei niedrigen Frequenzen nur geringe Werte annimmt, von einem so starken Rauschen überlagert ist, daß der EMK-Vektor nur bei höheren Frequenzen einigermaßen zuverlässig ermittelt werden kann. Außerdem bewirken eine Nullpunkt-Drift der Meßglieder und Integratoren sowie andere Rechenfehler einen vor allem bei niedrigen Frequenzen störenden Gleichanteil in den errechneten Komponenten des Modellvektors.

Die Fehler dieses Rechenmodells werden durch das "Strommodell" umgangen, das von einem Meßwert für die Läuferstellung ausgeht und aus den gemessenen Ständerströmen und einem Parameter für die Läuferzeitkonstante den Fluß berechnet. Es bildet also die in der Maschine zum Aufbau des Flusses führenden elektrischen Vorgänge nach, ist in seiner Dynamik aber vor allem bei höheren Frequenzen dem Spannungsmodell unterlegen.

Aus der DE-A-33 19 350 (VPA 83 P 3161) ist bekannt, beide Modelle miteinander zu kombinieren. Der Modellvektor wird durch Integration eines Summenvektors errechnet, der aus dem EMK-Vektor und einem Korrekturvektor gebildet ist. Die Komponenten dieses Korrekturvektors werden in einem auf den Modellvektor orientierten Koordinatensystem so vorgegeben, daß durch die zum Modellvektor parallele Komponente des Korrekturvektors die Regelabweichung des Modellvektor-Betrages vom Sollwert des Flusses ausgeregelt wird, während über die zum Modellvektor senkrechte Komponente der Differenzwinkel zwischen dem Modellvektor und einem in einem Strommodell errechneten, zweiten Modellvektor ausgeregelt wird.

Um die im Strommodell benötigte Läuferzeitkonstante zu berechnen, ist in der E-B-71 847 vorgeschlagen, der feldparallelen Komponente (dem sogenannten "Magnetisierungsstrom") einen oszillierenden Zusatz-Sollwert aufzuschalten, so daß dem Ständerstromvektor der Maschine in der zum Feld parallelen Komponente ein oszillierender Anteil eingeprägt wird. Die zum Feld senkrechte Komponente des Ständerstromvektors, die als "Wirkstrom" das Drehmoment bestimmt, wird durch den Zusatz-Sollwert nicht beeinflußt, aber bei einer Fehleinstellung des im Strommodell verwendeten Parameters für die Läuferzeitkonstante und einer damit verbundenen Fehlberechnung des Flußvektors wirkt der Zusatz-Sollwert sowohl auf den zum wahren Flußvektor gehörenden wahren Magnetisierungsstrom als auch den wahren Wirkstrom, so daß sich die Oszillationen des Zusatz-Sollwertes auch im Drehmoment bemerkbar machen. Durch Multiplikation der Meßwerte dieser Drehmomentschwankungen mit dem (zeitverzögerten) Zusatz-Sollwert und anschließende Integration wird ein Korrelationssignal gebildet, das nur dann den Wert Null annimmt, wenn der Modellwert des Flusses mit dem wahren Flußvektor zusammenfällt. Daher wird das Korrelationssignal dazu verwendet, um die Läuferzeitkonstante des Strommodells bis zum Verschwinden des Korrelationssignals nachzustellen.

Wird in das Strommodell auch die Läuferwicklung und der Erregerstrom einbezogen, so kann dadurch auch der Fluß einer Synchronmaschine berechnet werden. Das Strommodell versagt allerdings bei permanent erregten Maschinen. Außerdem ist ein entscheidender Nachteil, daß ein aufwendiger mechanischer Geber zur Erfassung der Läuferstellung erforderlich ist.

In der nicht-vorveröffentlichten DE-A-35 42 941 (VPA 85 P 3421) ist bereits erläutert, daß ein hochfrequenter Strom, der in eine Ständerwicklung eingeprägt wird, teilweise auch in die anderen Ständerwicklungen übergekoppelt wird. Ursache dieser Überkoppelung ist in erster Linie eine durch den Flußvektor hervorgerufene Unsymmetrie der wirksamen Impedanzen in der Maschine. Die Amplituden des übergekoppelten hochfrequenten Signals sind vom Differenzwinkel zwischen dem eingeprägten hochfrequenten Strom und dem Feldvektor abhängig und ihre Hüllkurve kann direkt als Ersatz für das Signal eines mechanischen Gebers benutzt werden.

Der Erfindung liegt die Aufgabe zugrunde, einen anderen Weg zur Bestimmung des Flußvektors einer Drehfeldmaschine anzugeben, wobei ebenfalls hierzu kein mechanischer Geber verwendet wird.

Diese Aufgabe wird gelöst durch ein Verfahren mit den Merkmalen des Anspruchs 1 und eine Vorrichtung mit den Merkmalen des Anspruchs 8. Die Anwendung des Verfahrens ermöglicht den feldorientierten Betrieb einer Drehfeldmaschine, insbesondere einer permanent erregten Synchronmaschine, entsprechend dem Anspruch 7.

Wird die Vorrichtung entsprechend dem im Anspruch 11 angegebenen Verfahren betrieben, so kann eine Drehfeldmaschine aus dem Stillstand feldorientiert angefahren werden.

Weitere vorteilhafte Weiterbildungen der Erfindung sind in den Unteransprüchen angegeben und werden anhand von zwei bevorzugten Ausführungsbeispielen und drei Figuren näher erläutert:

FIG 1 zeigt schematisch den Aufbau einer Vorrichtung nach der Erfindung und für die dabei verwendete Rechenschaltung geben die

FIG 2 und 3 zwei Realisierungsmöglichkeiten.

Bevorzugtes Anwendungsgebiet der Erfindung ist der feldorientierte Betrieb von Synchronmaschinen. Selbst bei einer permanent erregten Synchronmaschine, deren Läufer eine vollkommen rotationssymmetrische Dämpferwicklung (z.B. einen Läuferkäfig) aufweist, bewirken die zu dieser Vorzugsrichtung parallele und senkrechte Komponente des eingespeisten Hochfrequenzstromes, daß auch der dadurch im Läufer induzierte Anteil des resultierenden Flußvektors in diesen beiden Richtungen Hochfrequenzanteile enthält, die zwar proportional sind zum eingeprägten Hochfrequenzstrom, deren Proportionalitätsfaktoren aber unterschiedlich sind. Dieser hochfrequente Anteil entspricht daher einem Vektor, der in seiner Richtung gegenüber dem eingespeisten Strom gedreht ist und somit auch eine Komponente aufweist, die senkrecht zur Richtung des eingeprägten Hochfrequenzstromes steht. Diese senkrechte Komponente wird über die Ankerrückwirkung auch in die elektrischen Größen der Ständerwicklung eingekoppelt und kann dort erfaßt werden. Diese Einkoppelung ist somit vom Differenzwinkel zwischen dem eingeprägten Hochfrequenzstrom und der Vorzugsrichtung des Läufers abhängig und kann zur Identifizierung der Läuferlage bzw. des Flusses verwendet werden. Wird daher die Richtung des eingeprägten Hochfrequenzstromes solange verändert, bis die dazu senkrechte, eingekoppelte Komponente des entsprechenden Vektors (Flußvektor, Ständerspannungsvektor oder insbesondere Ständerstromvektor) minimal wird, so kann auf diese Weise erreicht werden, daß im abgeglichenen Zustand eine feste Winkelbeziehung zwischen der Richtung des eingeprägten Hochfrequenzstromes und der Achse des Läufers bzw. des Flusses herrscht.

Die Erfindung geht daher von einem Verfahren zum Bestimmen des Flußvektors einer Drehfeldmaschine aus, der über einen Umrichter ein Ständerstromvektor eingeprägt wird, wobei der zu einem berechneten Modell-Flußvektor parallelen Komponente des Ständerstromvektors ein oszillierender Anteil mit vorgegebener Oszillationsfrequenz eingeprägt wird und in der zum Modellvektor senkrechten Komponente des Ständerstromvektors oder eines dieser senkrechten Komponente zugeordneten Signals die Oberschwingung, die diese Oszillatorfrequenz besitzt, erfaßt wird.

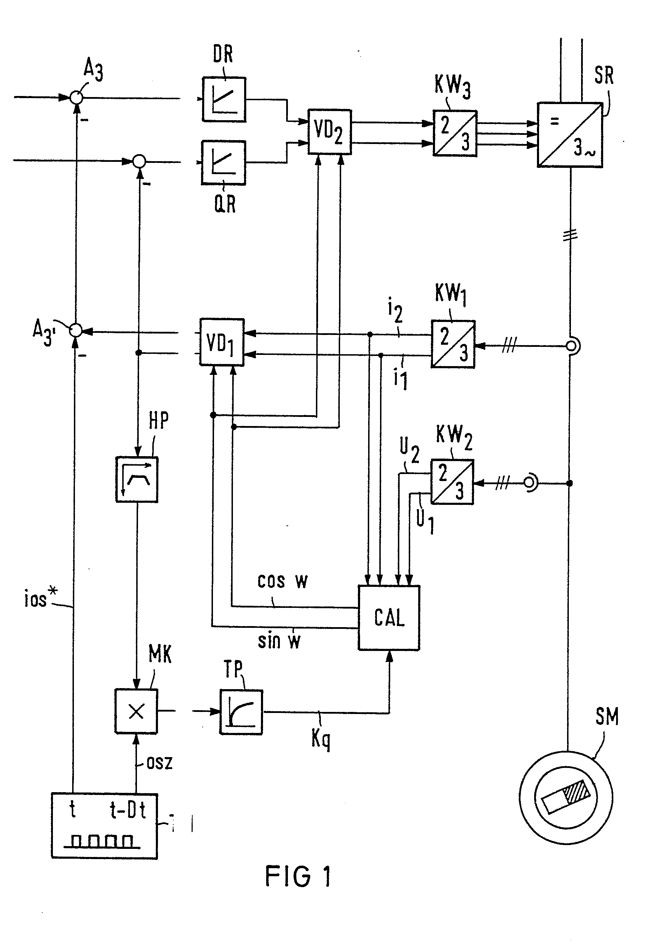

Gemäß FIG 1 wird der Modell-Flußvektor in einem Flußrechner CAL berechnet, der zunächst aus Ständerstrom und Ständerspannung einen EMK-Vektor bildet. Sind mit $U_1$ und $U_2$ bzw. $i_1$ und $i_2$ bzw. $F_1$, $F_2$ bzw. $E_1$, $E_2$ die Komponenten des Ständerspannungsvektors $\underline{U}$, des Ständerstromvektors $\underline{I}$ bzw. des Ständerflußvektors $\underline{F}$ bzw. des EMK-Vektors $\underline{E}$ und mit $R_s$ der Widerstand der Ständerwicklung bezeichnet, so ergibt sich aus der Spannungsbilanz des Ständers

$$E_1 = U_1 - R_s \cdot i_1 = d(F_1)/dt,$$
$$E_2 = U_2 - R_s \cdot i_2 = d(F_2)/dt.$$

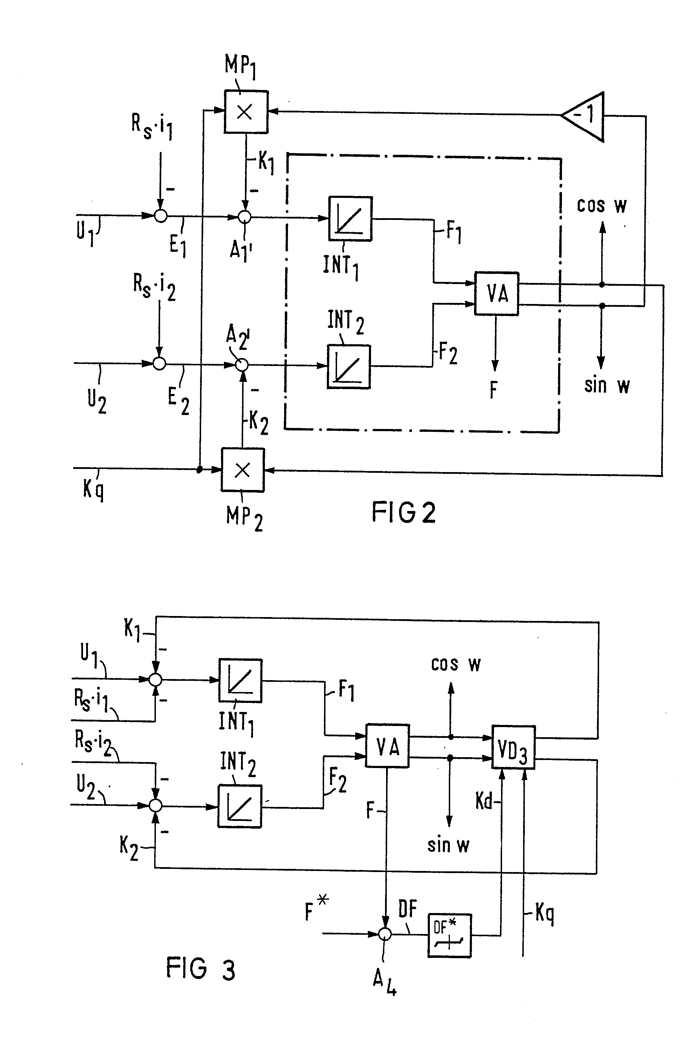

Die Komponenten des Flußvektors im Ständerbezugssystem ergeben sich daher als Integrale, die gemäß FIG 2 an den Ausgängen der Integratoren $INT_1$ und $INT_2$ abgegriffen werden und deren Integranden an Additionsstellen $A_1$ und $A_2$ aus Meßwerten für die Komponenten des Ständerstromvektors und des Ständerspannungsvektors gebildet werden. In FIG 1 werden diese Komponenten jeweils über 2/3-Koordinatenwandlern $KW_1$ und $KW_2$ an entsprechenden Meßgliedern für die elektrischen Größen der Ständerwicklung abgegriffen. Die Schaltung zur Integration des EMK-Vektors wird in FIG 2 ergänzt durch einen Vektoranalysator VA, an dessen Betragsausgang der Vektorbetrag

$$F = \sqrt{F_1{}^2 + F_2{}^2}$$

und an dessen Winkelausgang die Größen cos w und sin w abgreifbar sind, wobei mit w = arc tan (F₂ F·) der Winkel der Feldachse im ständerbezogenen Koordinatensystem angegeben ist.

Falls die Additionsstellen $A_1$ und $A_2$ die EMK-Komponenten $E_1$ und $E_2$ korrekt bilden und die Integrationsschaltung keinen Integrationsfehler aufweist, können die Komponenten i· und i₂ des Ist-Strom-vektors von einem Vektordreher VD· (FIG 1) mittels dieses im Rechners CAL errechneten Modell-Flußvektors bzw. dessen Winkelsignal cos w, sin w in die Komponenten id und iq in einem um den Winkel w gedrehten Koordinatensystem umgerechnet werden. Da in diesem Idealfall der Modell-Flußvektor die Richtung der tatsächlichen Flußachse annimmt, ist die zum Modell-Flußvektor parallele Komponente id des Ständerstromvektors mit der zur tatsächlichen Feldachse parallelen Komponente identisch.

Das gleiche gilt für die dazu senkrechte Ständerstromkomponente iq.

Die EMK-Komponenten und die Ausgangssignale der Integratoren sind jedoch fast stets mit Meß-und Rechenfehlern behaftet, der Modell-Flußvektor gibt also den tatsächlichen Flußvektor nicht korrekt wieder. Daher wird dem EMK-Vektor am Eingang der Integrationsschaltung ein Korrekturvektor vektoriell addiert, der eine zum Modell-Flußvektor senkrechte Komponente Kq aufweist, die nur dann den Wert Null annimmt, wenn Modellvektor und Flußvektor in gleiche Richtung zeigen. Diese zum Modell-Flußvektor senkrechte Komponente Kq entspricht einem Korrekturvektor $\underline{K}$, desen zum Modell-Flußvektor parallele Komponente den Wert Kd = 0 besitzt. Für die vektorielle Addition zu dem im Ständerbezugssystem errechneten EMK-Vektor muß dieser Korrekturvektor $\underline{K}$ ins Ständerbezugssystem transformiert werden, er besitzt dann im Fall der FIG 2 die Komponenten $K_1$ = - Kq . sin w und $K_2$ = Kq . cos w, die durch entsprechende Multiplikatoren MT· und MT₂ gebildet und an den Additionsstellen $A_1$' und $A_2$' zu den EMK-Komponenten addiert werden. Für Kq = 0 bewirkt dieser Korrekturvektor, daß die Integranden der Integrationsschaltung einen gegenüber dem EMK-Vektor gedrehten Vektor darstellen, so daß auch die Richtung w des errechneten Modell-Flußvektors verändert wird. Durch die negative Bewertung des Korrekturvektors an den Addi-tionsstellen $A_1$' und $A_2$' wird sichergestellt, daß bei einer abnehmenden Korrekturvektor-Komponente Kq der Modell-Flußvektor in die Richtung des wahren Flußvektors gedreht wird.

Wird nun durch einen oszillierenden Zusatz-Sollwert, vorteilhaft einen sinusförmigen Zusatz-Sollwert ios*, dem Ständerstromvektor eine oszillierende, zum Modellvektor parallele Komponente eingeprägt, so tritt bei einer Fehlberechnung des Modellvektors in der dazu senkrechten Ständerstrom-Komponente, die am iq-Ausgang des Vektordrehers $VD_1$ abgegriffen werden kann, eine Oberschwingung auf, die mit ios* korreliert ist und die gleiche Oszillationsfrequenz aufweist. Wird daher die Korrekturvektor-Komponente Kq verändert, bis diese korrelierte Komponente am iq-Ausgang verschwindet, so bedeutet dies, daß der Winkel w des Modellvektors gedreht wird, bis Modellvektor und tatsächlicher Flußvektor parallel liegen. Der Modellvektor gibt dann zumindest die gesuchte Richtung des Flußvektors wieder.

Die Einprägung der oszillierenden, zum Modell-Flußvektor parallelen Ständerstromkomponente geschieht nach FIG 1 über die feldorientierte Regelung der Drehfeldmaschine, wie in FIG 1 symbolisch für den bevorzugten Fall einer Synchronmaschine, insbesondere einer permanent erregten Synchronmaschine SM dargestellt ist. Im Normalbetrieb ist das Drehmoment der Maschine von einem Sollwert id* für die feldparallele Ständerstromkomponente vorgegeben, wobei id* z.B. am Ausgang eines Drehzahlreglers abgegriffen werden kann. Durch Überlagerung mit dem oszillierenden Zusatz-Sollwert ios* und Regelvergleich mit dem Istwert id bilden die Additionsstellen $A_3$ und $A_3$' das Eingangssignal eines Stromreglers DR, dessen Ausgangssignal die d-Komponente eines Steuervektors bildet. In ähnlicher Weise kann ein Stromregler QR aus der Regelabweichung der zum Modell-Flußvektor senkrechten Ständerstromkomponente iq von einem entsprechenden, betriebsmäßig vorgegebenen Sollwert iq* die q-Komponente dieses Steuervektors bilden. Ein Vektordreher $VD_2$, der ebenfalls von dem Winkelsignal (cos w, sin w) gespeist ist und die zum Vektordreher VD· inverse Transformation vom dq-Koordinatensystem in das ständerorientierte 1,2-Koordinatensystem liefert, errechnet daraus die ständerorientierten Kom ponenten des Steuervektors, die z.B. mittels eines 2,3-Koordinatenwandlers $KW_3$ in die Komponenten eines dreiphasigen Systems umgerechnet werden, wobei diese Steuergrößen jeweils die auf einen der drei Ständeranschlüsse arbeitenden Ventile eines Umrichters SR steuern.

Als Maß für die erfaßte Oberschwingung des Signals, das der zum Modell-Flußvektor senkrechten Komponente des Ständerstromvektors zugeordnet ist, wird vorteilhaft die Korrelation zwischen dem eingeprägten, oszillierenden Anteil der parallelen Ständerstromkomponente und einem Meßwert für die andere Komponente des Ständerstromvektors bestimmt. Daraus wird der Betrag Kq für die senkrechte Komponente des Korrekturvektors gebildet.

Nimmt man z.B. für die Oszillationsfrequenz $w_0$ den Zusatz-Sollwert an zu

ios* = x . sin ($w_0$t),

so überlagert sich einem durch iq* vorgegebenen, gegenüber der Oszillationsfrequenz nur schwach veränderlichen Anteil y'(t) in der Komponente id eine Oberschwingung mit einer Amplitude y, der Oszillationsfrequenz $w_0$ und einer durch die Übertragungsfunktion des Regelkreises gegebenen Phasenverschiebung p, und man erhält

iq = y . sin ($w_0$ . t + p) + y'(t).

Bildet man nun den Korrelationskoeffizienten

$$Kq(Dt) = \lim_{T \to \infty} \frac{2}{T} \int_{-T/2}^{T/2} osz*(t-DT) . iq . dt$$

wobei osz*(t - Dt) das um eine Verzögerungszeit Dt verzögerte Signal der eingeprägten, oszillierenden Ständerstromkomponente ist, so erhält man

Kq(Dt) = x . y . cos (p + $w_0$ . Dt).

Der nicht-korrelierte Anteil y'(t) trägt also nichts bei und es ergibt sich ein maximales Korrelationssignal, falls Dt = -p/$w_0$ gilt.

In FIG 1 ist daher vorgesehen, an einem Modulationstaktgeber TM sowohl den Zusatz-Sollwert ios* sowie das entsprechende phasenverzögerte Signal osz* abzugreifen, dessen Verzögerung gegenüber ios* auf die Modulationsfrequenz $w_0$ und die Phasenverzögerung p des Regelkreises abgestimmt ist. Zur Bildung des Korrelationssignals genügt es, das Produkt iq über eine endliche Zeit (mindestens eine Periode des Modulationstaktes) zu integrieren, wozu dem entsprechenden Multiplizierer MK ein Tiefpaßfilter TP nachgeschaltet ist. Ferner ist dem Multiplizierer MK vorteilhaft ein Hochpaßfilter HP (insbesondere ein Filter zweiter Ordnung) vorgeschaltet. Dieses Hochpaßfilter unterdrückt eine Welligkeit des Korrelationssignals, die im Produkt osz* . id durch den in iq enthaltenen, nur wenig veränderlichen Anteil y'(t) an sich vorhanden ist und durch die endliche Integrationszeit des Tiefpaßfilters nicht vollkommen ausgeglichen wird. Andererseits werden niederfrequente Anteile von iq, die durch den momentenbildenden Sollwert iq* vorgegeben werden, von dem Hochpaßfilter abgeschirmt und tragen zur Bildung der Korrelation nicht bei.

Durch geeignete Wahl der Oszillationsfrequenz kann erreicht werden, daß die umrichterbedingten Oberschwingungen in der inneren Spannung der Synchronmaschine einen hinreichenden Frequenzabstand zum Modulationstakt aufweisen und die Bildung des Korrelationssignals nicht stören. Da außerdem bereits für den Betrieb des Umrichters ein steiles Anwachsen des Ständerstromes in der Regel durch eine Stromanstiegs-Begrenzung für den Sollwert iq* vermieden werden muß, was z.B. durch entsprechende Begrenzungsschaltungen bei der Sollwertbildung sichergestellt werden kann, liefert das Hochpaßfilter HP praktisch nur Signale, die mit dem Zusatz-Sollwert ios* korreliert sind.

Es zeigt sich, daß es auch bei einer über einen Direktumrichter gespeisten Synchronmaschine, insbesondere einer fremderregten Synchronmaschine mit Dämpferwicklungen, gelingt, das Verfahren anzuwenden, wobei hier die durch den Betrieb des Direktumrichters bedingten Oberschwingungen des Ständerstromes bereits ausreichen, um das Korrelationssignal zu bilden. In diesem Fall wird kein Modulationstaktgeber mit einer eigenen Modulationsfrequenz benötigt, vielmehr genügt es, osz* aus den Steuersignalen des Direktumrichters, also den Zündimpulsen der Umrichterventile, abzuleiten; da diese Zündimpulse die eingeprägte oszillierende Stromkomponente beschreiben und somit zur Bildung des Korrelationssignales herangezogen werden können, ist ein Zusatz-Sollwert ios* entbehrlich.

Die in FIG 2 gezeigte Schaltung bewirkt, wie bereits erläutert wurde, daß die Richtung des Modellvektors durch die Komponente Kq des Korrekturvektors in die Richtung der wahren Feldachse gedreht wird. Der Betrag des Modell-Flußvektors kann durch die erwähnten Meß-und Rechenfehler weiterhin verfälscht sein. Eine Betragskorrektur kann durch eine zum Modellvektor parallele Komponente des Korrekturvektors erreicht werden, wenn diese parallele Korrekturvektor-Komponente ebenfalls solange verändert wird, bis der Betrag des Modellvektors annähernd mit dem wahren Flußvektor oder einer entsprechenden Führungsgröße F* übereinstimmt, die z.B. über die magnetisierende Komponente iq* des Soll-Ständerstromvektors den Flußvektor der Maschine bestimmt.

Dies ist in FIG 3 gezeigt, wo der am Vektoranalysator VA abgegriffene Betrag F des Modell-Flußvektors mit F* verglichen wird (Vergleichstelle $A_4$). Z.B. kann bei einer permanent erregten Synchronmaschine vorausgesetzt werden, daß sich die Amplitude des Luftspaltflusses innerhalb eines gewissen Bereiches um die Amplitude der permanent vorhandenen Erregerflusses bewegt. Subtrahiert man die Größe F* des konstanten Erregerflusses vom Modellfluß (Additionsstelle $A_4$), so erhält man die Differenz DF, die selbst für den Fall, daß der Modell-Flußvektor korrekt errechnet ist, wegen der zeitlichen Veränderung des Luftspaltflusses innerhalb eines Toleranzbandes ± DF* liegt. Ein entsprechendes Kennlinienglied FR bildet daher beim Ausführungsbeispiel der FIG 3 die parallele Komponente Kd des Korrekturvektors, die z.B. proportional zur Überschreitung der Toleranzband-Breite DF* vorgegeben werden kann.

Im Ständerbezugssystem besitzt diese zum Flußvektor parallele Komponente Kd die Komponenten $Kd_1$ = Kd . cos w und $Kd_2$ = Kd . sin w. Der gesamte Korrekturvektor, der sich aus den beiden auf den Modell-Flußvektor bezogenen Komponenten Kq und Kd zusammensetzt, besitzt somit die ständerbezogenen Komponenten

$K_1$ = Kd . cos w - Kq . sin w
$K_2$ = Kd sin w + Kq cos w.

Dies entspricht der Transformation eines Vektors mit den beiden Orthogonalkomponenten Kd und Kq in ein um den Winkel -w gedrehtes Koordinatensystem, so daß für diese Koordinatentransformation wiederum ein Vektordreher (FIG 3: $VD_3$) verwendet werden kann.

Dieses in FIG 1 gezeigte Verfahren ist vor allem geeignet für den feldorientierten Betrieb der Drehfeldmaschine bei niedrigen Drehzahlen. Bei höheren Drehzahlen ermittelt der Flußrechner CAL den Modell-Flußvektor ohnehin mit hinreichender Genauigkeit, daher kann der Modulationstakt abgeschaltet bzw. Kq = Kd = 0 gesetzt werden.

Beim erstmaligen Einschalten der Maschine kann aber durch das erfindungsgemäße Verfahren nur festgestellt werden, ob die Regelkreise für iq und id entkoppelt sind, d.h. die Achse des Modell-Flußvektors mit der Läufer-oder Flußachse übereinstimmt.

Dies ist aber auch bei einer Antiparallelität zwischen dem wahren und dem errechneten Fluß gegeben.

Diese Unsicherheit kann auf folgende Weise beseitigt werden:

Im Stillstand werden zunächst die Integratoren $INT_1$ und $INT_2$ auf einen willkürlichen Schätzwert des Flußvektors gesetzt, z.B. kann zunächst $F_1$ = $F_2$ und $F_2$ = 0 vorgegeben werden, wobei $F_2$ ein Wert für den näherungsweise bekannten Flußbetrag ist. Die Stromregler sind zunächst noch gesperrt. Der Flußrechner CAL liefert also zunächst den Transformationswinkel w = 0° für die Vektordreher.

Wird nun für die parallele Komponente des Ständerstromvektors ein endlicher Sollwert und für die senkrechte Komponente iq* = 0 vorgegeben, so prägen die Stromregler DR und QR somit der Drehfeldmaschine SM einen Ständerstromvektor mit den Komponenten $i_1$ = id*, $i_2$ = 0 ein. Da zunächst die Stellung des Polrades beliebig sein kann, erzeugt dieser konstante Ständerstromvektor zusammen mit dem Läuferfluß ein Drehmoment, das den Läufer parallel zum Ständerstromvektor dreht, so daß auch der wahre Flußvektor den Richtungswinkel von 0° annimmt, auf dem die Integratoren gesetzt und noch immer festgehalten sind. Ist der Läuferfluß zufällig am Anfang dem Startwert des Ständerstromvektors entgegengesetzt gerichtet, so entsteht kein Drehmoment, jedoch handelt es sich dabei um eine instabile Lage, in der das Polrad nicht verharrt. Das Polrad stellt sich somit in jedem Fall in die gesetzte Richtung des Modell-Flußvektors und des dazu parallelen Ständerstromvektors ein.

Nach dem Abklingen dieser Einschwingbewegung können unter Einschalten des Modulationstaktes die Integratoren freigegeben werden. Somit kann nun durch Hochfahren des Drehmoment-bestimmenden Sollwertes iq*, der z.B. von einem nunmehr freigegebenen Drehzahlregler geliefert werden kann, die Maschine hochgefahren werden. Ab einer gewissen Drehzahl, z.B. 10 % der Nenn-Drehzahl, kann die Modulation wieder abgeschaltet werden. Nach diesem Einschaltvorgang und der Freigabe des Modulationstaktes kann die Drehfeldmaschine insbesondere in einem Betriebsbereich betrieben werden, der praktisch die Drehzahl Null einschließt, ohne daß sich eine Nullpunktdrift der Integratoren oder andere Rechenfehler auswirken.

## Ansprüche

1. Verfahren zum Bestimmen des Flußvektors einer Drehfeldmaschine (SM), der über einen Umrichter (SR) ein Ständerstromvektor eingeprägt wird,
wobei der zu einem berechneten Modell-Flußvektor ($F_1$, $F_2$ bzw. F.w) parallelen Komponente (id) des Ständerstromvektors ein oszillierender Anteil (ios*) vorgegebener Oszillationsfrequenz eingeprägt und die die Oszillationsfrequenz besitzende Oberschwingung eines der anderen Komponente des Ständerstromvektors zugeordneten Signals erfaßt wird,
**dadurch gekennzeichnet,**
daß der Modell-Flußvektor berechnet wird, indem aus Ständerstrom ($i_1$, $i_2$) und Ständerspannung ($U_1$, $U_2$) ein EMK-Vektor ($U_1$ -$R_s$ . $i_1$ ; $U_2$ -$R_s$ . $i_2$) gebildet, zum EMK-Vektor ein Korrekturvektor (Kq, Kd bzw. $K_1$, $K_2$)

vektoriell addiert und der Summenvektor integriert wird und

daß die zum Modell-Flußvektor senkrechte Komponente (Kq) des Korrekturvektors in Abhängigkeit von der erfaßten Oberschwingung verändert wird, bis die erfaßte Oberschwingung minimal wird.

2. Verfahren nach Anspruch 1,

**dadurch gekennzeichnet,**

daß als Maß für die erfaßte Oberschwingung die Korrelation zwischen dem eingeprägten, oszillierenden Anteil der parallelen Komponente und einem Signal (iq) der anderen Komponente des Ständerstromvektors gebildet und proportional hierzu der Wert (Kq) der senkrechten Komponente des Korrekturvektors bestimmt wird.

3. Verfahren nach Anspruch 2,

**dadurch gekennzeichnet,**

daß die zum Modell-Flußvektor parallele und senkrechte Komponente des Ständerstromvektors jeweils auf einen Komponenten-Sollwert geregelt werden, daß ein oszillierender Zusatz-Sollwert zum Sollwert der parallelen Komponente addiert wird und daß als Korrelationssignal das Produkt aus dem Signal für die senkrechte Komponente des Ständerstromvektors und dem mit einer von der Oszillationsfrequenz abhängigen Zeitkonstanten verzögerten Zusatz-Sollwert gebildet wird.

4. Verfahren nach Anspruch 3,

**dadurch gekennzeichnet,**

daß das Signal für die senkrechte Komponente des Ständerstromvektors über ein Hochpaßfilter geführt wird.

5. Verfahren nach Anspruch 3,

**dadurch gekennzeichnet,**

daß das Produkt über ein Tiefpaßfilter geführt wird.

6. Verfahren nach Anspruch 1,

**dadurch gekennzeichnet,**

daß die parallele Komponente des Korrekturvektors aus dem Betrag des Modellvektors und einer Führungsgröße für den Betrag des Flußvektors bestimmt wird.

7. Anwendung des Verfahrens nach Anspruch 1 zum Betrieb einer Drehfeldmaschine, wobei feldorientierte Sollwerte für die beiden Komponenten des Ständerstromvektors vorgegeben und mittels des Modell-Flußvektors in ständerorientierte Steuergrößen für den Umrichter transformiert werden.

8. Vorrichtung zur Bestimmung des Flußvektors einer umrichtergespeisten Drehfeldmaschine mit

a) Mitteln ($A_1$, $A_2$, $A_1'$, $A_2'$) zur Bildung eines EMK-Vektors aus Strom ($i_1$, $i_2$) und Spannung ($U_1$, $U_2$) der Drehfeldmaschine und zur Vektoraddition eines Korrekturvektors ($K_1$, $K_2$) zum EMK-Vektor am Eingang einer Integrationsschaltung zur vektoriellen Integration,

b) einem Taktgeber (TM) zur Bildung eines oszillierenden Modulationssignals (ios'),

c) einer Strom-Regeleinrichtung, die aus dem Modulationssignal und Sollwerten, die die Komponenten des Ständerstromvektors festlegen, mittels eines am Ausgang der Integratorschaltung abgegriffenen Richtungswinkels eines Modell-Flußvektors die Steuersignale des Umrichters bildet,

d) einem Korrelationsdetektor (MK) zur Bildung eines Korrelationssignals aus dem Modulationssignal und einem dem Istwert der senkrechten Komponente (iq) des Ständerstromvektors entsprechenden Signal und

e) einem Korrekturvektor-Bildner ($MP_1$, $MP_2$; $VD_3$), der aus den Ausgangssignalen der Integratorschaltung und des Korrelationsdetektors einen Vektor bildet, dessen zum Modell-Vektor senkrechte Komponente proportional dem Korrelationssignal (Kq) ist und der als Korrekturvektor auf den Eingang der Integrationsschaltung zürückgeführt ist.

9. Vorrichtung nach Anspruch 8,

**gekennzeichnet** durch einen Vektordreher ($VD_3$) als Korrekturvektor-Bildner.

10. Vorrichtung nach Anspruch 9,

**gekennzeichnet** durch einen am Eingang des Vektordrehers angeordneten Vergleicher für den Betrag des Modell-Flußvektors und einer Führungsgröße für den Flußbetrag.

11. Verfahren zum Betrieb der Vorrichtung nach Anspruch 8, wobei im Stillstand zunächst die Integratoren auf einen willkürlichen Schätzwert des Flußvektors gesetzt, in der Regeleinrichtung ein endlicher Wert für die zum Modell-Flußvektor parallele Komponente und praktisch Null als Sollwert für die senkrechte Sollwert-Komponente des Ständerstromvektors vorgegeben und die Regeleinrichtung freigegeben wird und nach Abklingen von Einschwingvorgängen der Taktgeber eingeschaltet und die Integratoren freigegeben werden.

FIG 1

FIG 2

FIG 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | EP-A-0 127 158 (SIEMENS AG) --- | | H 02 P 5/40 |
| D,A | EP-A-0 071 847 (SIEMENS AG) --- | | H 02 P 7/62 |
| A | REGELUNGSTECHNIK, Band 32, Nr. 1, Januar 1984, Seiten 18-26, München, DE; R. GABRIEL: "Mikroechergeregelte Asynchronmaschine, ein Antrieb für hohe dynamische Anforderungen" * Seiten 21,22 * --- | 1,8 | |
| A | DE-B-2 353 594 (SIEMENS AG) * Figuren 2,3; Anspruch 1 * --- | 1,7,8, 11 | |
| A | EP-A-0 161 616 (SIEMENS AG) * Figur 5; Zusammenfassung * ----- | 1,8 | |

| RECHERCHIERTE SACHGEBIETE (Int. Cl.4) |
|---|
| H 02 P |
| G 01 R |

Der vorliegende Recherchenbericht wurde für alle Patentansprüche erstellt

| Recherchenort | Abschlußdatum der Recherche | Prüfer |
|---|---|---|
| DEN HAAG | 19-02-1988 | BEYER F. |